# FASCICULE DE BREVET EUROPEEN

(11) **EP 2 782 783 B1**
(45) Date de publication et mention de la délivrance du brevet: **05.04.2017**
(21) Numéro de dépôt: 12773033.1
(22) Date de dépôt: 13.09.2012
(51) Int. Cl.: B60R 7/04, B60N 3/10

(54) **DISPOSITIF DE RANGEMENT, NOTAMMENT DANS UNE CONSOLE CENTRALE D'UN VEHICULE AUTOMOBILE**
VERSTAUUNGSVORRICHTUNG, INSBESONDERE IN EINER MITTELKONSOLE EINES KRAFTFAHRZEUGS
STOWAGE DEVICE, IN PARTICULAR IN A CENTRAL CONSOLE OF A MOTOR VEHICLE

(30) Priorité: 24.11.2011 FR 1160723
(43) Date de publication de la demande: 01.10.2014
(73) Titulaire: Renault S.A.S., 92100 Boulogne-Billancourt (FR)
(72) Inventeur: LEGRAND, Jean-Pierre, F-28300 Bercheres Saint Germain (FR)
(86) Numéro de dépôt international: PCT/FR2012/052048
(87) Numéro de publication internationale: WO 2013/076390

(56) Documents cités:
- DE-C1- 19 724 597
- DE-U1-202004 001 804
- FR-A1- 2 884 467
- US-A- 6 065 729
- US-A1- 2003 047 955

## Description

La présente invention concerne un dispositif de rangement, notamment dans l'habitacle d'un véhicule automobile, et plus particulièrement une console centrale de véhicule pourvue d'un tel dispositif de rangement.

Le rangement dans les véhicules automobiles est aujourd'hui un critère essentiel en matière de confort et d'ergonomie. La console centrale des véhicules automobiles, située entre les deux sièges avant, est particulièrement prisée pour recevoir de multiples équipements. Les zones de confort et d'accessibilité sur la console centrale sont particulièrement encombrées puisque l'on doit tout à la fois disposer dans ces mêmes zones divers organes fonctionnels, des moyens de commandes (par exemple commande de frein de parking, commande de système de navigation, régulateur de vitesses), ainsi que des volumes de rangement. Le document DE19724597 révèle un dispositif de rangement selon le préambule de la revendication 1.

L'invention vise à proposer une solution d'implantation d'un dispositif de rangement qui surmonte ces difficultés en limitant les conflits d'encombrement avec les équipements et zones fonctionnelles environnants.

A cet effet, l'invention a pour objet un dispositif de rangement, notamment dans l'habitacle d'un véhicule automobile, comprenant une partie coquée renfermant un logement débouchant à l'extérieur par un passage apte à être occulté par une trappe d'accès mobile entre une position fermée au droit du passage et une position ouverte en retrait du passage, caractérisé en ce que le dispositif comprend un contenant situé dans le logement, apte à recevoir au moins un objet cylindrique ayant un diamètre de l'ordre de 66 mm et une longueur comprise entre 150 et 200 mm, l'objet s'étendant suivant une direction longitudinale du contenant, le contenant étant relié d'une part à la trappe et d'autre part à la partie coquée ou à un support fixe solidaire de celle-ci, via des moyens de liaison conformés pour d'une part disposer le contenant dans une position éloignée du passage dans laquelle sa direction longitudinale forme avec l'horizontale un angle compris entre 0 et 30° lorsque la trappe est dans la position fermée, tout en accueillant ledit objet dans cette position, et d'autre part disposer le contenant dans une position rapprochée du passage dans laquelle sa direction longitudinale forme avec l'horizontale un angle supérieur à 45° lorsque la trappe est dans la position ouverte.
Ainsi la trappe constitue non seulement un moyen de fermeture et d'ouverture du logement mais également un moyen de commande ou de préhension permettant de déplacer le contenant situé dans le logement entre une position éloignée du passage qui est très peu accessible, et une position rapprochée du passage qui offre une très bonne accessibilité. L'invention met à profit des zones qui seraient perdues ou très difficilement exploitables dans un agencement traditionnel, typiquement dans le cas d'une console centrale de véhicule automobile, comportant en partie supérieure des moyens de commande et/ou de rangement accessibles par le dessus. L'invention permet de disposer un dispositif de rangement en dessous de ces moyens de commande et de rangement supérieurs. Le dispositif est adapté au rangement d'un objet cylindrique ayant au moins un diamètre de l'ordre de 66 mm et une longueur comprise entre 150 et 250 mm qui sont des dimensions correspondant typiquement à une bouteille de 0,5 litre ou une canette de 0,33 litre. Un aspect essentiel de l'invention réside dans le fait que le dispositif est adapté à accueillir l'objet et à l'enfermer lorsque la trappe est fermée. Le dispositif est adapté à relever le contenant et à le rapprocher de l'ouverture pour le rendre plus accessible lorsque la trappe est ouverte.

Selon d'autres caractéristiques avantageuses de l'invention :
- la trappe comporte d'une part une première articulation sur la partie coquée ou sur un support fixe solidaire de celle-ci et d'autre part une seconde articulation sur le contenant,
- le contenant est relié à la partie coquée ou à un support fixe solidaire de celle-ci via au moins une biellette articulée à ses deux extrémités, en particulier deux biellettes situées de part et d'autre du contenant,
- le logement est délimité par un caisson sensiblement étanche lorsque la trappe est dans la position fermée, le caisson étant pourvu d'une arrivée d'air pour la climatisation du logement,
- la trappe et ladite au moins une biellette sont articulées sur un support fixe solidaire de la partie coquée constitué par le caisson,
- le caisson comporte des parois épousant sensiblement la forme extérieure du volume global occupé par le contenant lorsqu'il est déplacé entre ses positions éloignée et rapprochée du passage.

L'invention a également pour objet un véhicule automobile comprenant une console centrale intégrant un dispositif de rangement ayant tout ou partie des caractéristiques précédentes.

Suivant d'autres caractéristiques avantageuses de l'invention, la console centrale comprend une première zone sur laquelle sont disposés des moyens de commande et/ou de rangement accessibles par le dessus, la première zone étant prolongée suivant la direction longitudinale du véhicule par une seconde zone définissant un compartiment de rangement, notamment accessible via un capot formant accoudoir ou via un volet à lamelles, le dispositif de rangement étant situé en dessous de la première zone de sorte que le passage débouche dans le compartiment de rangement.
Ainsi le dispositif de rangement ne nécessite pas un accès direct et met à profit un accès déjà prévu pour un compartiment de rangement. Le redressement du contenant lors de son déplacement de la position éloignée à la position rapprochée permet de limiter le débattement de la trappe lors de son ouverture et l'intrusion dans le compartiment de rangement des objets disposés ou retirés du contenant ; il est en effet avantageux de limiter cette intrusion suivant la direction longitudinale avant-arrière du véhicule afin de ne pas entrer en conflit avec d'autres objets déjà présents dans le compartiment de rangement. Le contenant étant dimensionné pour recevoir un objet ayant un diamètre de l'ordre de 66 mm et une longueur comprise entre 150 et 250 mm (ce qui correspond typiquement à une bouteille d'eau de 0,5 l ou une canette de boisson de 0,33 l), l'insertion dans le contenant (et inversement l'extraction) s'effectue donc suivant une direction fortement redressée lorsque la contenant est dans la position rapprochée du passage. Dans cette position, la direction longitudinale de l'objet forme un angle supérieur à 45°. A l'inverse lorsque le contenant est dans la position éloignée du passage, la direction longitudinale de l'objet forme avec l'horizontale un angle compris entre 0 et 30°, de manière à occuper le moins d'espace possible, mesuré verticalement, ce qui permet de situer ce dispositif de rangement en dessous des commandes et autres zones de rangement comme évoqué précédemment.

L'invention sera mieux comprise à la lecture de la description suivante d'un exemple non limitatif de l'invention, et à la lumière des dessins annexés sur lesquels :
- les figures 1 à 3 représentent des vues en perspective d'une console centrale pourvue d'un dispositif de rangement selon l'invention, à différents stade de déploiement de la trappe et du contenant, entre une position fermée de la trappe et une position ouverte de la trappe ;
- les figures 4 à 6 représentent des vues de côté de la console centrale pourvue d'un dispositif de rangement selon l'invention, correspondant respectivement aux vues des figures 1 à 3 ;
- la figure 7 représente une vue en perspective de la console centrale selon l'invention, illustrant un logement dans lequel sont placés une bouteille de 0,5 l et une canette de 0,33 l ;
- la figure 8 représente un caisson étanche et sa trappe fermeture tel que monté dans un dispositif de rangement selon l'invention ;
- la figure 9 représente un contenant déplaçable dans le caisson étanche de la figure 8, le contenant étant pourvu de biellette de liaison et contenant à titre illustratif une bouteille de 0,5 l et une canette de 0,33 l.

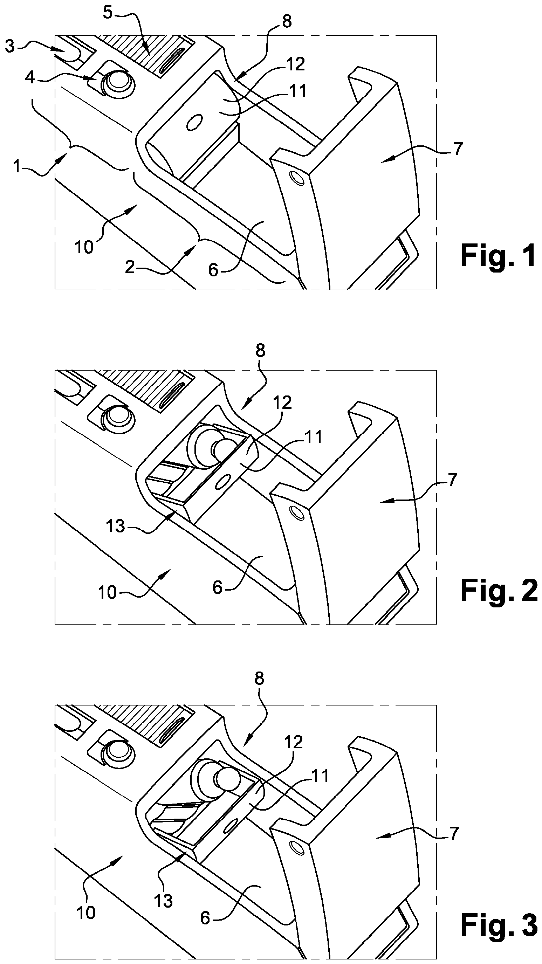

On a représenté aux figures 1 à 6 une partie d'une console centrale d'un véhicule automobile. Cette partie se décompose en une première zone 1 et une seconde zone 2 située dans le prolongement longitudinal de la première zone 1, en considérant la direction longitudinale avant-arrière du véhicule (fig. 1 et 4-6). Dans l'exemple illustré, la seconde zone 2 est située à l'arrière de la première zone 1. La console centrale peut éventuellement comprendre d'autres zones que nous ne détaillerons pas dans le cadre de cet exposé. La première zone 1 comporte typiquement des moyens de commande, consistant en l'espèce d'une commande de frein de parking électrique 3 et une commande de navigation 4. La première zone comporte ici également une zone de rangement 5 située latéralement par rapport aux moyens de commande 3, 4, cette zone de rangement étant accessible par l'ouverture d'un volet à lamelles (fig. 1). Ces moyens de commande 3, 4 et cette zone de rangement 5 sont dans l'exemple illustré accessibles par le dessus. La première zone 1 est située dans une région supérieure de la console centrale compte tenu de l'accessibilité directe que l'on attend des moyens de commande 3, 4 et de la zone de rangement 5 précités. Dans l'exemple illustré, la seconde zone 2 est constituée d'un compartiment de rangement 6 qui s'étend sensiblement sur toute la hauteur de la console centrale. Le compartiment de rangement 6 peut être refermé par un capot supérieur 7 susceptible de former un accoudoir en position fermée (fig. 1-3 et 7). Dans cette position, le capot 7 est situé dans le prolongement de la première zone 1, à l'arrière de celle-ci, avec une surface supérieure qui peut être affleurante avec la surface supérieure de la première zone 1.

Selon l'invention, la console centrale comprend un dispositif de rangement situé en dessous de la première zone 1. Le dispositif de rangement est pourvu d'un passage 8 donnant accès à un logement 9 situé à l'intérieur de la partie coquée 10 constituant l'enveloppe de la console centrale. Le dispositif de rangement est intégré dans la console de sorte que le passage 8 débouche dans le compartiment de rangement 6 de la seconde zone 2 (le compartiment de rangement 6 est considéré comme étant extérieur au logement 9 du dispositif de rangement). Ce passage 8 a une forme générale rectangulaire, orientée de façon sensiblement verticale ou inclinée par rapport à la verticale d'un angle typiquement inférieur à 45° (entre 20° et 30° dans le cas illustré).

Selon l'invention, le passage 8 donnant accès au logement 9 peut être occulté par une trappe d'accès 11 mobile entre une position fermée au droit du passage 8 et une position ouverte en retrait du passage 8. La trappe 11 a une forme complémentaire à celle du passage 8 de manière à fermer ce dernier de façon sensiblement étanche. La trappe 11 comporte une paroi frontale 12 s'étendant transversalement à la direction avant-arrière du véhicule, qui a une forme bombée ou convexe dans l'exemple illustré (la forme convexe est formée du côté du compartiment de rangement 6 tandis que la forme concave opposée, correspondant en creux à la forme convexe, est située du côté du logement 9). La trappe 11 comporte des flasques latéraux 13 verticaux s'étendant depuis la paroi frontale 12 en direction du logement 9. Lorsque la trappe 11 est dans la position fermée, les flasques latéraux 13 pénètrent dans le logement 9. A l'opposé de la paroi frontale 12, les flasques latéraux 13 ont une forme en pointe 14 au niveau de laquelle est située une articulation 15 de la trappe 11 comme décrite ci-après.

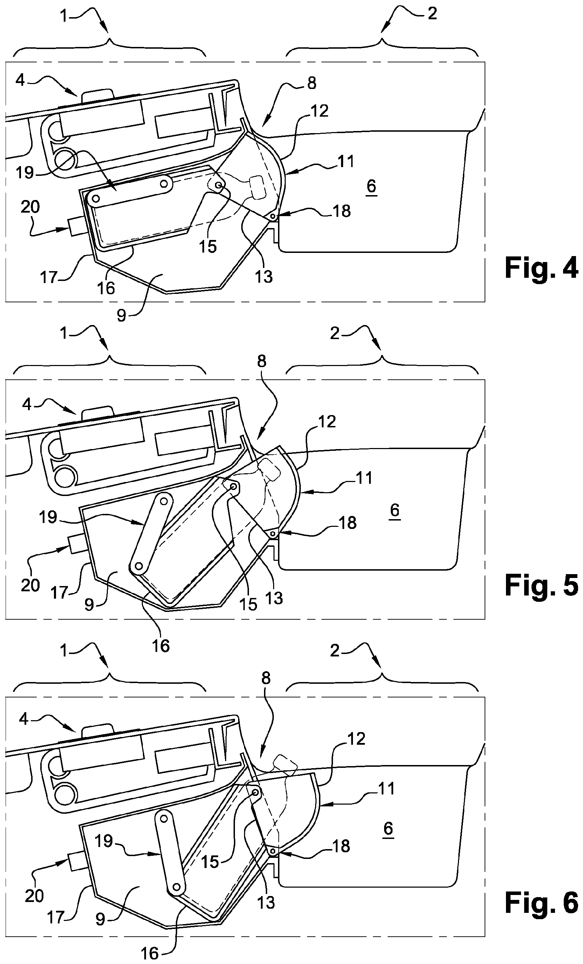

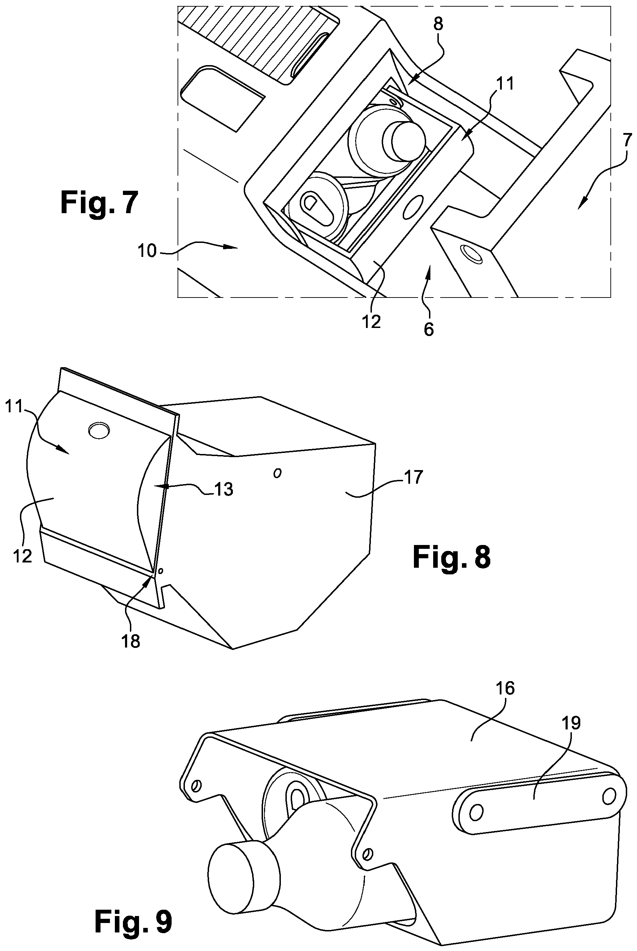

Selon l'invention, le dispositif de rangement comprend un contenant 16 situé dans le logement 9, qui est relié d'une part à la trappe 11 et d'autre part à la partie coquée 10 ou à un support fixe (fig. 4-6, 8) solidaire de celle-ci 10. Le support fixe est ici constitué d'un caisson 17 délimitant par ses parois intérieures le logement 9. Le contenant est relié à la trappe 11 et au caisson 17 via des moyens de liaison 15, 19 conformés pour déplacer le contenant 16 entre une position éloignée du passage 8 lorsque la trappe 11 est dans la position fermée (illustré aux figures 1 et 4) et une position rapprochée du passage 8 lorsque la trappe 11 est dans la position ouverte (illustré aux figures 3 et 6). Les notions « éloignée » et « rapprochée » s'entendent ici relativement l'une à l'autre. Les déplacements de la trappe 11 et du contenant 16 sont ainsi combinés l'un à l'autre, de sorte que le déplacement de la trappe commande le déplacement du contenant 16 dans le logement 9. La trappe 11 est montée pivotante à sa base sur un bord du caisson 17 via une articulation 18 située à la jonction des flasques latéraux 13 et de la paroi frontale 12. La trappe 11 est également montée pivotante sur une extrémité du contenant 16 adjacente au passage 8 via une articulation 15 permettant de tirer ou de repousser le contenant dans le logement 9 en fonction du déplacement de la trappe 11.
Le contenant 16 a une forme s'étendant longitudinalement entre un fond situé à l'opposé du passage 8 et une ouverture d'accès adjacente au passage 8. Le contenant 16 est relié par son fond au caisson 17 via deux biellettes 19 disposées latéralement de part et d'autre du contenant 16. Les biellettes sont articulées à chacune de leurs extrémités sur le contenant et sur le caisson. Les biellettes 19 sont orientées suivant la direction longitudinale du contenant lorsqu'il est en position éloignée du passage de façon à présenter un encombrement minimal dans le logement 9 (figure 4). Les biellettes 19 s'étendent au dessus du contenant lorsqu'il est en position rapprochée du passage (figure 6) de façon à suspendre le contenant dans le logement 9. Dans un mode de réalisation non illustré de l'invention, on peut ne prévoir qu'une seule biellette, par exemple située latéralement ou sur un plan vertical médian du contenant 16.
Le caisson 17 délimitant le logement 9 intègre le passage 8 ainsi qu'une arrivée d'air 20 située à l'opposé du passage 8, permettant le branchement d'une arrivée d'air climatisé, destinée à réfrigérer le logement 9. Le caisson 17 peut être approvisionné et monté d'un seul tenant sur la console centrale, avec les éléments constituant l'ensemble du dispositif de rangement de l'invention (figure 8). Le contenant 16 est en effet introduit dans le logement 9 et relié au caisson par les biellettes 9. La trappe 11 est montée et reliée au caisson via l'articulation 18. La trappe 11 est également reliée au contenant via l'articulation 15. Lorsque la trappe 11 est dans la position fermée, le caisson 17 délimite le logement 9 de façon sensiblement étanche de façon à optimiser la réfrigération de l'air. Le caisson a des parois épousant sensiblement le volume global occupé par le contenant 16 se déplaçant entre sa position éloignée et sa position rapprochée du passage 8. De ce fait, on optimise encore la réfrigération de l'air dans le logement 9. Le caisson 17 présente en outre un encombrement extérieur minimal facilitant son intégration dans la console centrale.

Le contenant 16 est avantageusement conformé et dimensionné pour recevoir au moins un objet ayant une forme générale cylindrique de révolution, dont le diamètre est de l'ordre de 66 mm et la longueur est comprise entre 150 mm et 250 mm (« de l'ordre de » s'entend avec une marge de plus ou moins 10 mm). Ces dimensions correspondent typiquement à une bouteille en plastique ayant une contenance de 0,5 ou à une canette en aluminium ayant une contenant de 0,33 l (dimensions standard - figure 7). Deux objets de ce type peuvent être placés côte à côte dans le contenant. Un léger jeu périphérique permet d'introduire et d'extraire ces bouteilles ou canettes sans difficulté ou risque de coincement. Le contenant 16 comprend des parois intérieures de forme cylindrique, épousant la forme cylindrique des bouteilles ou canettes, de façon à caler ces bouteilles ou canettes et ainsi éviter qu'elles roulent latéralement dans le contenant 16. On note que le contenant a une forme intérieure s'étendant suivant la direction longitudinale d'introduction de l'objet dans le contenant.
Le déplacement du contenant 16 entre la position éloignée et la position rapprochée du passage 8 s'accompagne d'un redressement du contenant 16 et donc des bouteilles ou canettes, comme on peut le voir aux figures 4 à 6. Ce redressement est dû aux biellettes 19 sous l'effet de la traction exercée par la trappe 11 basculant de sa position fermée à la position ouverte. Ce redressement du contenant 16 offre très avantageusement la possibilité d'introduire ou de retirer les bouteilles suivant une direction dont l'angle est supérieur à 45° par rapport à l'horizontale, par exemple un angle non limitatif de l'ordre de 50-60°. Cette forte composante verticale de l'orientation du contenant limite avantageusement l'intrusion des bouteilles ou canettes dans le compartiment de rangement 6, ce qui évite de retirer préalablement les objets qui se trouvent dans ce compartiment.

L'ouverture de la trappe 11 peut être obtenue par un système de type « pression-traction » (on enfonce la trappe légèrement, un moyen de rappel contraint la trappe à ressortir légèrement de manière à pouvoir être saisie manuellement). En variante, l'ouverture peut être réalisée par une simple traction à l'aide d'une zone de préhension conformée sur la paroi frontale de la trappe 11.

Bien entendu, l'invention n'est pas limitée aux modes ou variantes de réalisation décrits précédemment et comprends tous les équivalents techniques de ces moyens.

On a indiqué que le contenant était adapté à la réception de bouteilles ou canettes de 66 mm de diamètre. Bien entendu, le contenant peut être adapté à recevoir d'autres récipients ou objets divers sans sortir du cadre de l'invention.

## Revendications

1. Dispositif de rangement, notamment dans l'habitacle d'un véhicule automobile, comprenant une partie coquée (10) renfermant un logement (9) débouchant à l'extérieur par un passage (8) apte à être occulté par une trappe (11) d'accès mobile entre une position fermée au droit du passage (8) et une position ouverte en retrait du passage (8), **caractérisé en ce que** le dispositif comprend un contenant (16) situé dans le logement (9), apte à recevoir au moins un objet cylindrique ayant un diamètre de l'ordre de 66 mm et une longueur comprise entre 150 et 250 mm, l'objet s'étendant suivant une direction longitudinale du contenant, le contenant étant relié d'une part à la trappe (11) et d'autre part à la partie coquée (10) ou à un support fixe solidaire de celle-ci (10), via des moyens de liaison (15, 19) conformés pour d'une part disposer le contenant (16) dans une position éloignée du passage (8) dans laquelle sa direction longitudinale forme avec l'horizontale un angle compris entre 0 et 30° lorsque la trappe (11) est dans la position fermée, tout en accueillant ledit objet dans cette position, et d'autre part disposer le contenant (16) dans une position rapprochée du passage (8) dans laquelle sa direction longitudinale forme avec l'horizontale un angle supérieur à 45° lorsque la trappe (11) est dans la position ouverte.

2. Dispositif de rangement selon la revendication 1, **caractérisé en ce que** la trappe (11) comporte d'une part une première articulation (18) sur la partie coquée (10) ou sur un support fixe solidaire de celle-ci (10) et d'autre part une seconde articulation (15) sur le contenant (16).

3. Dispositif de rangement selon la revendication 1 ou 2, **caractérisé en ce que** le contenant (16) est relié à la partie coquée (10) ou à un support fixe solidaire de celle-ci (10) via au moins une biellette (19) articulée à ses deux extrémités, en particulier deux biellettes situées de part et d'autre du contenant (16).

4. Dispositif de rangement selon l'une quelconque des revendications 1 à 3, **caractérisé en ce que** le logement (9) est délimité par un caisson (17) sensiblement étanche lorsque la trappe (11) est dans la position fermée, le caisson (17) étant pourvu d'une arrivée d'air (20) pour la climatisation du logement (9).

5. Dispositif de rangement selon la revendication 4, **caractérisé en ce que** la trappe (8) et ladite au moins une biellette (19) sont articulées sur un support fixe solidaire de la partie coquée constitué par le caisson (17).

6. Dispositif de rangement selon la revendication 4 ou 5, **caractérisé en ce que** le caisson (17) comporte des parois épousant sensiblement la forme extérieure du volume global occupé par le contenant (16) lorsqu'il est déplacé entre ses positions éloignée et rapprochée du passage (8).

7. Véhicule automobile comprenant une console centrale intégrant un dispositif de rangement selon l'une quelconque des revendications précédentes.

8. Véhicule automobile selon la revendication 7, **caractérisé en ce que** la console centrale comprend une première zone (1) sur laquelle sont disposés des moyens de commande (3, 4) et/ou de rangement (5) accessibles par le dessus, la première zone (1) étant prolongée suivant la direction longitudinale du véhicule par une seconde zone (2) définissant un compartiment de rangement (6), notamment accessible via un capot (7) formant accoudoir ou via un volet à lamelles, le dispositif de rangement étant situé en dessous de la première zone (1) de sorte que le passage (8) débouche dans le compartiment de rangement (6).

## Patentansprüche

1. Ablagevorrichtung, insbesondere in dem Fahrgastraum eines Kraftfahrzeugs, aufweisend einen Schalenabschnitt (10), welcher eine Aufnahme (9) einschließt, welche über einen Durchlass (8) nach außen mündet, welcher durch eine Zugangsklappe (11) verdeckt werden kann, welche zwischen einer dem Durchlass (8) gegenüber liegenden, geschlossenen Position und einer von dem Durchlass (8) entfernten, offenen Position beweglich ist, **dadurch gekennzeichnet, dass** die Vorrichtung einen in der Aufnahme (9) angeordneten Behälter (16) aufweist, welcher dafür geeignet ist, ein zylindrisches Objekt mit einem Durchmesser in der Größenordnung von 66 mm und einer Länge, welche zwischen 150 und 250 mm liegt, aufzunehmen, wobei sich das Objekt gemäß einer longitudinalen Richtung des Behälters erstreckt, wobei der Behälter einerseits mit der Klappe (11) und andererseits mit dem Schalenkörper (10) oder mit einem fest mit diesem (10) verbundenen festen Träger über Verbindungsmittel (15, 19) verbunden ist, welche angepasst sind, um einerseits den Behälter (16) in einer von dem Durchlass (8) entfernten Position anzuordnen, in welcher seine longitudinale Richtung mit der Horizontalen einen Winkel einschließt, welcher zwischen 0 und 30 ° liegt, wenn sich die Klappe (11) in einer geschlossenen Position befindet, wobei gleichzeitig das Objekt in dieser Position aufgenommen ist, und andererseits den Behälter (16) in einer zu dem Durchlass (8) angenäherten Position anzuordnen, in welcher seine longitudinale Richtung mit der Horizontalen einen Winkel einschließt, welcher größer als 45° ist, wenn sich die Klappe (11) in der offenen Position befindet.

2. Ablagevorrichtung nach Anspruch 1, **dadurch gekennzeichnet, dass** die Klappe (11) einerseits ein erstes Gelenk (18) an dem Schalenkörper (10) oder an einem fest mit diesem (10) verbundenen festen Träger und andererseits ein zweites Gelenk (15) an dem Behälter (16) aufweist.

3. Ablagevorrichtung nach Anspruch 1 oder 2, **dadurch gekennzeichnet, dass** der Behälter (16) über mindestens eine Stange (19), welche an ihren beiden Enden angelenkt sind, insbesondere zwei Stangen, welche beiderseits des Behälters (16) angeordnet sind, mit dem Schalenkörper (10) oder mit einem fest mit diesem (10) verbundenen festen Träger verbunden ist.

4. Ablagevorrichtung nach einem der Ansprüche 1 bis 3, **dadurch gekennzeichnet, dass** die Aufnahme (9) von einem Kasten (17) abgegrenzt wird, welcher im Wesentlichen dicht ist, wenn sich die Klappe (11) in der geschlossenen Position befindet, wobei der Kasten (17) mit einer Luftzufuhr (20) zur Klimatisierung der Aufnahme (9) versehen ist.

5. Ablagevorrichtung nach Anspruch 4, **dadurch gekennzeichnet, dass** die Klappe (8) und die mindestens eine Stange (19) an einem fest mit dem von dem Kasten (17) gebildeten Schalenkörper verbundenen festen Träger angelenkt sind.

6. Ablagevorrichtung nach Anspruch 4 oder 5, **dadurch gekennzeichnet, dass** der Kasten (17) Wände aufweist, welche sich im Wesentlichen der äußere Form des gesamten Volumens anschmiegen, welches von dem Behälter (16) eingenommen wird, wenn er zwischen seiner von dem Durchlass (8) entfernten und angenäherten Position bewegt wird.

7. Kraftfahrzeug, aufweisend eine zentrale Konsole, welche eine Ablagevorrichtung nach einem der vorhergehenden Ansprüche integriert.

8. Kraftfahrzeug nach Anspruch 7, **dadurch gekennzeichnet, dass** die zentrale Konsole eine erste Zone (1) aufweist, in welcher Mittel zur Betätigung (3, 4) und / oder Ablage (5), welche von oben zugänglich sind, aufweist, wobei die erste Zone (1) gemäß der longitudinalen Richtung des Fahrzeugs durch eine zweite Zone (2) verlängert wird, welche ein Ablagefach (6) definiert, welches insbesondere über einen eine Armlehne bildenden Deckel (7) oder über eine Lamellenklappe zugänglich ist, wobei die Ablagevorrichtung unterhalb der ersten Zone (1) angeordnet ist, so dass der Durchlass (8) in das Ablagefach (6) mündet.

## Claims

1. Stowage device, in particular in the cabin of a motor vehicle, comprising a shell part (10) containing a housing (9) opening to the outside by way of a passage (8) which is able to be shut off by an access hatch (11) movable between a closed position in line with the passage (8) and an open position set back from the passage (8), **characterized in that** the device comprises a container (16) situated in the housing (9) and able to receive at least one cylindrical object having a diameter of the order of 66 mm and a length between 150 and 250 mm, the object extending in a longitudinal direction of the container, the container being connected, on the one hand, to the hatch (11) and, on the other hand, to the shell part (10) or to a fixed support secured to the latter (10), via connection means (15, 19) configured so as, on the one hand, to arrange the container (16) in a position away from the passage (8) in which its longitudinal direction forms with the horizontal an angle between 0 and 30° when the hatch (11) is in the closed position, while receiving the said object in this position, and so as, on the other hand, to arrange the container (16) in a position towards the passage (8) in which its longitudinal direction forms with the horizontal an angle greater than 45° when the hatch (11) is in the open position.

2. Stowage device according to Claim 1, **characterized in that** the hatch (11) comprises, on the one hand, a first articulation (18) on the shell part (10) or on a fixed support secured to the latter (10), and, on the other hand, a second articulation (15) on the container (16).

3. Stowage device according to Claim 1 or 2, **characterized in that** the container (16) is connected to the shell part (10) or to a fixed support secured to the latter (10) via at least one link rod (19) articulated at its two ends, in particular two link rods situated on either side of the container (16).

4. Stowage device according to any one of Claims 1 to 3, **characterized in that** the housing (9) is delimited by a casing (17) which is substantially leaktight when the hatch (11) is in the closed position, the casing (17) being provided with an air inlet (20) for air-conditioning the housing (9).

5. Stowage device according to Claim 4, **characterized in that** the hatch (8) and the said at least one link rod (19) are articulated on a fixed support which is secured to the shell part and constituted by the casing (17).

6. Stowage device according to Claim 4 or 5, **characterized in that** the casing (17) comprises walls substantially mating with the exterior shape of the global volume occupied by the container (16) when it is moved between its positions away from and towards the passage (8).

7. Motor vehicle comprising a central console incorporating a stowage device according to any one of the preceding claims.

8. Motor vehicle according to Claim 7, **characterized in that** the central console comprises a first region (1) on which there are arranged control means (3, 4) and/or stowage means (5) accessible from above, the first region (1) being extended in the longitudinal direction of the vehicle by a second region (2) defining a stowage compartment (6), accessible in particular via an armrest-forming cover (7) or via a slatted shutter, the stowage device being situated below the first region (1) such that the passage (8) opens into the stowage compartment (6).
